# EUROPEAN PATENT APPLICATION

(11) **EP 4 492 124 A1**
(43) Date of publication of application: **15.01.2025**
(21) Application number: 23184933.2
(22) Date of filing: 12.07.2023
(51) Int. Cl.: G02B 27/00

(54) **EYE TRACKING SYSTEM**

(71) Applicant: VoxelSensors SRL, 1000 Brussels (BE)
(72) Inventor: Greenberg, Boris, 6579402 Tel Aviv Jaffa (IL); Van Der Tempel, Ward, 3140 Keerbergen (BE)

(57) **Abstract**

The present invention relates to an eye tracking system (100). The system comprises at least one projection means (3) adapted to project a light beam (4) on a predetermined area of a cornea (2) of an eye (1). The system further comprises at least one optical sensor (6) capable of detecting reflected light (5) from the eye (1) and determining the location of detection thereon. The reflected light (5) from the eye (1) comprises at least one, preferably two, specular reflection, preferably at least a first Purkinje reflection (P1), more preferably at least a first Purkinje reflection (P1) and a fourth Purkinje reflection (P4). The system (100) is adapted to calculate the lateral and/or angular translation of the eye (1), or the change thereof, based on the location of detection and/or the displacement thereof.

## Description

### TECHNICAL FIELD

The present invention relates to the field of optical sensing systems and, more particularly, to a system and method for eye tracking.

### BACKGROUND

Optical sensing systems are used for a variety of applications, one of which is eye tracking, which is of particular importance in the field of augmented reality (AR), virtual reality (VR), and mixed reality (XR). In many cases, such a system is located very close to the eyes of the user, for example, on a pair of glasses or a head-mounted system.

Such a system typically operates by emitting light of a specific wavelength on the complete area of the eye and observing the back reflection and analyzing it. This is problematic since the optical power of the emitted light should be very low to ensure the eye's safety. It is, however, not easy to develop such a system, especially since the area under the glasses (e.g. VR glasses) is usually dark, which implies that the system should operate in a dark environment, the system should discriminate between its own light sources and other ambient reflections of sources of light i.e. without using other light sources in the environment. In addition, the signal-to-noise ratio should also be as high as possible. Another area for improvement is the accuracy of the system. On the one hand, making the system small also reduces the accuracy since small changes in eye orientation become challenging to detect. On top of this, such a system should be power efficient and able to detect the eye's orientation with very low latency.

There is a need, therefore, for optical sensing systems that allow accurate, low power, low latency, and safe eye tracking. The present invention of the eye aims to resolve or at least improve some of the problems mentioned above.

### SUMMARY OF THE INVENTION

In a first aspect, the present invention relates to an optical sensing system for 3D imaging. The system comprises at least one projection means adapted to project a projection output at a predetermined area of the cornea of the eye.

The system further comprises at least one optical sensor capable of detecting reflected light from the eye and determining the location of detection thereon. The system is adapted to calculate the lateral and/or angular translation of the eye, or the change thereof, based on the location of detection and/or the displacement thereof.

The reflected light from the eye comprises at least one reflection, preferably two reflections, preferably at least a first Purkinje reflection, more preferably at least a first Purkinje reflection and a fourth Purkinje reflection.

Preferred embodiments of the first aspect of the invention comprise one or a suitable combination of more than one of the following features:
- said at least one projection means is one movable projection means positioned such that the at least one reflection is received by said optical sensor, or wherein said at least one projection means is a plurality of projection means, preferably arranged in a 1 or 2-dimensional array, wherein the system is adapted to find at least one projection means which causes the at least one reflection to be received by said optical sensor, preferably at least the first Purkinje reflection and the fourth Purkinje reflection,
- the at least one projection means, in the plurality of projection means, is switched to another projection means based on the location of detection and/or the displacement thereof,
- each of said photodetector is a single photon avalanche detector SPAD capable of detecting single photons,
- the optical sensor comprises a plurality of sensing units, preferably forming a matrix of pixels, each of said sensing units comprising a photodetector,
- the system is adapted to filter the location of detection, determined by one sensing unit in said plurality of sensing units, based on the presence of said detection over at least one neighboring sensing unit to said one sensing unit, or based on the presence of said detection over at least two consecutive time steps,
- the at least one optical sensor has a minimum field of view of at least 5 millimeters on the eye image plane, along the horizontal axis of the eye, preferably at least 10 millimeters, more preferably at least 15 millimeters, wherein said field of view is covered by one optical sensor with a total of view of at least said minimum field of view, or by one movable optical sensor which position is movable to have a total field of view equal to at least said minimum field of view, or by a plurality of optical sensors with a total field of view equal to at least said minimum field of view,
- said projection means is adapted to be re-oriented, such that if the eye rotates the projection output is kept at said predetermined area of the cornea, said re-orientation being based on the location of detection and/or the displacement thereof,
- the system further comprises reflection means, preferably a dynamic deflecting mirror, more preferably a MEMS, wherein said projection output is projected at said reflection means such that said reflection means reflects said projection output at said predetermined area of the cornea, wherein said reflection means is adapted to be re-oriented, such that if the eye rotates the projection output is kept at said predetermined area of the cornea, said re-orientation being based on the location of detection and/or the displacement thereof,
- the system is adapted to find, in the plurality of projection means, at least one different projection means, wherein said different projection means causes the fourth Purkinje reflection to be received by said optical sensor,
- the system is calibrated by scanning the projection output of the projection means along a predetermined scanning trajectory on the cornea,
- the at least one optical sensor is configured to measure the location or locations of said at least one reflection and to provide said location or locations at the output of said sensor,
- the at least one optical sensor comprises a first optical sensor and a second optical sensor, wherein each optical sensor is adapted to receive a different reflection,
- the optical sensor is positioned in the conjugate plane of the pupil,
- the projection means is operated in a pulsed mode, wherein each pulse has a first predetermined intensity or a second predetermined intensity, or wherein each pulse has a first predetermined pulse width or a second predetermined pulse width, wherein said first predetermined intensity or first predetermined pulse width is adapted to cause one reflection to be received by said optical sensor, and wherein said second predetermined intensity or second predetermined pulse width is adapted to cause one different reflection to be received by said optical sensor, and
- wherein the at least one optical sensor is configured to measure at least two, preferably two, locations of detections on said optical sensor simultaneously, and to provide said locations at the output of said sensor, wherein each of said locations corresponds to a different specular reflection.

In a second aspect, the present invention relates to a display system using the eye tracking system according to the first aspect.

In a third aspect, the present invention relates to a method for tracking an eye orientation. The method comprises the steps of:
- illuminating the cornea of the eye to be tracked by a focused light beam on a predetermined area of said cornea, preferably in a pulsed mode, by means of a projection means;
- detecting the reflected light from the eye by means of at least one optical sensor, said reflected light comprises at least one, preferably two, specular reflection, said reflection is preferably at least a first Purkinje reflection, more preferably at least a first Purkinje reflection and a fourth Purkinje reflection;
- determining the location of detection on said at least one optical sensor;
- from the determined location of detection and/or the displacement thereof, calculating the orientation of said eye and/or the change thereof.

Preferred embodiments of the third aspect of the invention comprise one or a suitable combination of more than one of the following features:
∘ said projection means is one movable projection means, the method comprises the step of positioning the projection means such that the reflected light is received by said optical sensor; or
∘ said projection means is a plurality of projection means arranged in a 1 or 2-dimensional array, the method comprises the step of finding at least one projection means which causes the reflected light to be received by said optical sensor,

- the method comprises the step of, in the plurality of projection means, switching the operation from one projection means to another projection means, based on the location of detection and/or displacement thereof, such that the reflected light is received by said optical sensor,
- the optical sensor comprises a plurality of sensing units forming a matrix of pixels, each comprising a photo detector, preferably a single photon avalanche detector,
- the method comprises the step of filtering the location of detection, determined by one sensing unit in said plurality of sensing units, based on the presence of said detection over at least one neighboring sensing unit to said one sensing unit, or based on the presence of said detection over at least two consecutive time steps,
- the method further comprises the step of configuring the at least one optical sensor to have a minimum field of view of at least 5 millimeters on the eye image plane, along the horizontal axis of the eye, preferably at least 10 millimeters, more preferably at least 15 millimeters; wherein said field of view is covered by:
   ∘ one optical sensor with a total of view of at least said minimum field of view, or
   ∘ one movable optical sensor which position is movable to have a total field of view equal to at least said minimum field of view, or
   ∘ a plurality of optical sensors with a total field of view equal to at least said minimum field of view.
- the method further comprises the step of re-orienting the projection means, such that if the eye rotates, the light beam is kept at said predetermined area of said cornea, said re-orientation being based on the location of detection and/or the displacement thereof.
- the method further comprises the steps of:
   ∘ projecting the light beam on a reflection means;
   ∘ reflecting said light beam to said predetermined area of the cornea;
   ∘ based on the location of detection and/or the displacement thereof, re-orienting said reflection means such that if the eye rotates, the light beam is kept at said predetermined area of the cornea,
- the method further comprises the step of finding, in the plurality of projection means, at least one different projection means which causes the fourth Purkinje reflection to be received by said optical sensor,
- the method comprises the step of scanning the light beam along a predetermined scanning trajectory on the cornea,
- the at least one optical sensor comprises a first optical sensor and a second optical sensor, wherein the method comprises the step of:
   ∘ configuring the first optical sensor to receive one reflection, and
   ∘ configuring the second optical sensor to receive one different reflection,
- the method comprises the step of positioning the optical sensor in the conjugate plane of the pupil,
- the method comprises the steps of:
   ∘ operating the projection means in a pulsed mode;
   ∘ configuring each pulse to have:
      ▪ a first predetermined intensity or a second predetermined intensity, or
      ▪ a first predetermined pules width or a second predetermined pulse width;
   ∘ adapting the first predetermined intensity or first predetermined pulse width to cause one reflection to be received by said optical sensor; and
   ▪ adapting the second predetermined intensity or second predetermined pulse width to cause one different reflection to be received by said optical sensor.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The accompanying drawings incorporated in and forming a part of the specification illustrate several aspects of the present invention and, together with the description, serve to explain the principles of the invention. In the drawings:
Figure 1 schematically represents an eye tracking system (100) according to the invention.
Figure 2 shows different layers (41-44) of an eye (1) and different Purkinje reflections (P1-P4), according to the invention.
Figures 3 and 4 schematically represent alternative configurations for the eye tracking system (100) according to the invention.
Figure 5 shows in (a, b) the reflection means (10) focusing the light on different parts of the eye (1), and in (c, d) an extended depth of focus is obtained by having a plurality of projection means (3), according to the invention.
Figure 6 shows an example implementation of an optimized eye tracking system, according to the invention.
Figure 7 shows another implementation of the system, according to the invention.
Figure 8 shows a similar implementation of the system as Figure 7, taking into account only one lateral position of the eye, according to the invention.
Figure 9 shows an implementation of the system wherein different z-positions of the eye are taken into account, according to the invention.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION

In a first aspect, the present invention relates to an eye tracking system for eye tracking. The system comprises at least one projection means adapted to project a projection output (e.g. a light beam) at a predetermined portion (e.g. area) of the cornea of the eye. For example, the projection means is a light source, preferably a laser source which is able to generate a laser output. For example, the projection means is a light source with a substantially small numerical aperture such that the image of the source on the eye should be substantially small. The use of a laser source is advantageous due to the small numerical aperture, which allows accommodating different users having eyes at different eye relief in the face, for example people may have different nose sizes, which would move the system further or closer to the eyes.

The prior art systems have a wide beam which covers the full eye. Although such a wide beam guarantee obtaining the reflections from the eye, it is power inefficient. In this invention, the projection means generates a narrow beam, which covers a small part of the eye, but which still results in the needed reflections, and therefore making the system power efficient. For example, the projection output on the eye is a dot-like output, for example comprising one dot or a plurality of dots on the eye. For example, the beam with the minimum spot size that is needed to produce the needed reflections, for example such that the reflections received on the optical sensor are distinguishable and are not overlapping. For example, the numerical aperture should be good enough for the tracking range such that the reflections do not overlap.

The system further comprises at least one optical sensor capable of detecting reflected light from the eye and determining the location of detection thereon. For example, the projection means and the optical sensor are positioned such that the projection output is incident on the eye and reflected to and received by the optical sensor. The optical sensor is thereafter able to recognize the location of detection, which is linked to the location of the projection means and the angle under which it is positioned.

The output of the projection means is preferably pulsed, for example having a pulse width of at least 1 nanosecond, preferably at least 10 nanoseconds. Preferably, pulse width should not be too long such that the reflection is oversaturated, but should not be too short such that the reflection is not distinguishable or detectable. For example, in case of relying on Purkinje reflection, the pulse width should be short enough such that the first Purkinje reflection is not oversaturated, but should be long enough such that the fourth Purkinje reflection detectable and distinguishable. For example, 40 nanoseconds. Another implementation is to define 2 pulse widths, each more suited to each of the expected Purkinje Image intensities. For examples, one may use 1 nanosecond pulses for the first Purkinje reflection, while increasing the pulse width to 40 nanoseconds to sense the 4^{th} Purkinje reflection. In this case, the 1^{st} Purkinje reflection may be sensed as a larger dot due to the increased optical energy, while being able to correctly sense the 4^{th} Purkinje reflection. Furthermore, since the eye position needs tracking ideally in the 10 kHz domain, a significantly low duty-cycle can be achieved. With 1 nanosecond pulses and 100 samples for averaging of the sensed locations of the Purkinje reflections, a duty cycle of (100 nanosecond / 100 micros) = 0.1% can be achieved.

The system is furthermore adapted to calculate the lateral and/or angular translation, or the change thereof, based on the location of detection of said reflected light on said optical sensor, or based on the change or displacement of the location of detection. If such a calculation is based on the location of detection, then the size of the optical sensor would need to be large. However, if it is based on the displacement of location of detection, then the sensor can be much smaller. For example, after finding the change of location of the eye, the projection means can be realigned at the centre of the optical sensor, and wait for another displacement of the location of detection, wherein this happens on a regular basis. For example, in a first eye position, the projection output is reflected and received on point A of the optical sensor, and in a second eye position after some time, the projection output is reflected and received on point B of the optical sensor. Based on the difference between point A and point B, the system is adapted to or able to calculate the lateral and/or angular translation of the eye.

The reflected light from the eye comprises at least one, preferably two, reflections, preferably at least a first Purkinje reflection, more preferably at least a first Purkinje reflection and a fourth Purkinje reflection. Based on the individual movement of the Purkinje reflections on the eye and on the optical sensor, as well as on the relative movement of the reflections with respect to each other, the system is able to calculate the lateral and/or angular translation of the eye. The advantage of using the first and fourth Purkinje reflections is that that they both fall on the same optical plane as the pupil i.e. since their images are positioned in the same optical plane as the pupil. However, the invention is generalized and may be carried out using other reflections such as the second and third Purkinje reflection, or any combination of the four Purkinje reflections. Lateral translation, sometimes referred to as translation, is the movement of the eye in xyz directions, while angular translation, which is sometimes referred to as pitch, yaw, and roll, is the rotation of the eye, for example all possible directions.

For example, in case the eye angularly translates (e.g. a saccade), this results in a change of location in the first Purkinje reflection and fourth Purkinje reflection on the eye and on the optical sensor. Also, as known in the literature, the angular translation of the eye causes the first Purkinje reflection and fourth Purkinje reflection to separate (i.e. to change the separation from each other, whether to increase or decrease the separation). However, a lateral translation of the eye (i.e. translation in the eye socket) would not change the separation between the first Purkinje reflection and the fourth Purkinje reflection, and they would move together with the same amount instead. Knowing this, and knowing how the fourth Purkinje reflection moves relative to the first Purkinje reflection, it is possible to understand whether there is pure lateral translation, or both angular and lateral translation. For example, if the gaze moves from one point to another, the angular translation of the eye can be calculated by subtracting the change of fourth Purkinje reflection (ΔP4) from the change of the first Purkinje reflection (ΔP1). This may allow to analyze the reading of the optical sensor or understand it in advance, for example, if the eye is displaced by A degrees, that would correspond to B displacement between the fourth Purkinje reflection and the first Purkinje reflection. This is also advantageous in that the lateral movement between the eye and the optical sensor is identified. Such lateral movement is not always lateral translation in the eye socket, but sometimes it can be slippage of the system. For example, in case the system moves with respect to the eye, for example in case the system slips from the face of the user. Since the eye has a certain limit in which it can laterally translate, it is possible to understand whether the lateral movement is due to slippage, due to lateral translation of the eye, or a combination thereof. By knowing the above, it is possible to differentiate between pure lateral translation, pure angular translation, and a combination thereof.

Unlike in other systems, the pupil does not have to be tracked. Instead, the system relies on the first Purkinje reflection from the cornea, and optionally the fourth Purkinje reflection from the eye lens. This is advantageous since tracking the pupil is a complex process. Pupil tracking is inferior to tracking of Purkinje reflections, since the pupil image is usually distorted by the optical power of the cornea. Therefore, a model of the cornea would be needed to take into account said optical power of the cornea. However, in case of tracking the cornea, it is relied completely or almost completely on Purkinje reflections (the first, optionally together with the fourth), and how they move on said optical sensor.

The system is advantageous in that an extended depth of focus in the user's eye is obtained, since a non-divergent projection means is used. For example, a laser source. For example, it is possible to track the location of the eye even if it wasn't in the optimal focus. This is evident since different users may require a different focus, due to the difference in the depth of their eyes with respect to the system. For example, an image of the projection means is created on the cornea, and then reflected to the optical sensor.

Although this invention is described with reference to the first and the fourth Purkinje reflections, the skilled person understands that other reflections (the second and third Purkinje reflection) with other combinations may also be used to arrive at the invention, with different degrees of convenience. Therefore, the invention is generalized to one or two reflections which is able to provide information about the lateral and/or angular translation of the eye.

The system is configured such that the at least one reflection is received by said optical sensor. Specifically, the at least one projection means is adapted or positioned such that the at least one reflection (e.g. first Purkinje reflection, optionally together with the fourth Purkinje reflection) is received by said optical sensor. For example, the projection means is coupled to various lateral positions of the eye. For example, in case of movement of the eye, for example a relative movement between the eye and the optical sensor, the projection means is moved accordingly to compensate and keep the projection output in the same spot on the cornea. Alternatively, the projection means doesn't per se have to be itself positioned or repositioned, but the projection output is manipulated such that the reflections are received by said optical sensor, for example using some mirrors or the like.

There are three advantageous implementations as discussed throughout the description. In a first implementation, the projection means is continuously repositioned such that the reflections are maintained on the cornea and are received by said optical sensor. In an alternative implementation, a reflection means (e.g. a mirror or the like) is used to maintain the existence of the reflections. In yet an alternative implementation, a plurality of projection means is used, such that each projection means corresponds to a different position of the eye, for example such that for each lateral position of the eye, a projection means which allows the reflections to be received by said optical sensor is used. A combination of these implementation can also be envisaged.

It is worth mentioning that in the system, the projection means (as well as the MEMS, to be discussed below) are preferably positioned at the upper part, preferably on the left (for the left eye) or the right (for the right eye) corners of the eye, since these areas of the user's field of view do not effect spatial and environmental awareness.

Current generations of eye trackers such as camera-based systems are not accurate, for example because they rely purely on some actions performed by the user's eye for calibration, for example to look at certain stimuli in a certain order. Therefore, the best accuracy achievable is 0,5 degrees. In the system of this invention, it is not relied purely on actions performed by the user. Using this system and method of eye tracking together with accurate SLAM can have better than 0,5 degrees accuracy. This system can also be used for determination of user cognitive load and task saliency modality.

Since the eye is tracked in very low latency and high speed as will be described, it may be possible to identify whether a person has a certain medical condition, for example Parkinson's or Nystagmus, or other conditions which affect the motion of the eye, and whether a person has some symptoms thereof.

The system of this invention is useful for simultaneous localization and mapping SLAM, for example to understand the location at which the user is looking. This can also be useful to optimize the interaction experience in a VR system, for example to allow the user or assist in choosing an option by means of their gaze. This invention with SLAM also allows precise gaze localization in real and virtual environment. This invention also provides high accuracy, which allows to optimize foveation. The system of this invention also allows gaze contingent projection.

This system is also advantageous since there is no need to post-process the data, for example no need to image process the data, as is the case with prior art systems.

Preferably, the at least one projection means is one (but can be more than one) movable projection means. Said movable projection means is positioned (e.g. moved and rotated, angularly and laterally) such that the at least one reflection is received by said optical sensor. For example, to couple the projection means to different lateral and angular positions of the eye. Alternatively, and more advantageously, said at least one projection means is a plurality of projection means, preferably arranged in a 1 or 2-dimensional array, for example laterally separated in a 2D configuration. This is preferable since it is easier, faster, and more accurate than the first scenarios where the projection means itself is movable. For example, it is not needed to move the projection means e.g. not needed to move the light source to obtain the reflections. Although the 2-dimensional array scenario is preferable, the 1-dimensional array scenario is also workable. For example, having the 1-dimensional array along the horizontal axis of the eye, and either move the array along the vertical axis or use mirrors to reflect the light into the vertical direction, for example within 10 to 30 degrees from the central gaze. The plurality of projection means is preferably a plurality of VCSELs, which are advantageous since they provide single mode operation and consume low power. VCSELs are also advantageous since it is possible to group many of them in an array and make them addressable. VCSELs are also fast to switch. The output power for each VCSEL should be such that the light falling on the eye should not exceed 1.2 milliwatts in CW operation, due to eye safety reasons. The output power should be strong enough such that it is possible to image the fourth Purkinje reflection, but also not be too strong such that the first Purkinje reflection is over saturated. The VCSELs may have a wavelength in the near infrared range, preferably in the IR-A range, for example between 740 nm and 940 nm, for example 905 nm or 880 nm or 805 nm or 850 nm, or for example 1064 nm, or other wavelengths which the skilled person would find suitable. The projection means are not limited to VCSELs, but can be any other suitable type of light sources. The optical sensor is able to read such wavelengths.

The system is adapted to find (e.g. identify and turn ON), in the plurality, at least one projection means which causes or allows the at least the first Purkinje reflection to be received by said optical sensor, preferably the first Purkinje reflection and the fourth Purkinje reflection. For example, the plurality of projection means is addressable i.e. it is possible to selectively turn ON and OFF the projection means, for example one or more at the same time. For example, each projection means in the array is given an index, for example one projection means has the index 1, and the one next thereto has index 2, and so on. For example, the system is adapted to search, find, and turn ON the projection means for which one or two Purkinje reflections are received by said optical sensor, preferably at least the first Purkinje reflection, more preferably the first Purkinje reflection and the fourth Purkinje reflection.

Once this decision is made, the chosen projection means is used for the rest of the operation. For example, the projection means can be changed based on the lateral translation of the eye or slippage of the system. This is advantageous because the system doesn't have to be recalibrated, but only the index can be changed i.e. a different projection means in the array can be chosen. This invention is also advantageous because only one or a few projection means is or are turned ON at a time. Therefore, a portion of the eye is illuminated and imaged, therefore resulting in power efficient and fast operation. Preferably, the at least one projection means, in the plurality of projection means, which causes the at least first Purkinje reflection, is switched to another projection means based on the location of detection and/or the displacement thereof.

The output of each projection means in the plurality may be collimated. Alternatively, the projection means are imaged on the eye by means of a micro lens array at the output of the plurality of projection means.

Having an array of projection means (e.g. VCSELs) is advantageous. For example, in case of lateral translation of the eye, or in case of slippage of the system, for example a relative movement between the optical sensor and the eye, then the system can continue operation without moving the projection means. Instead, the operation is switched to a different VCSEL (e.g. a neighboring or semi-neighboring pixel) which is optimal to the position of the eye. The above is based on the displacement of the location of detection of said reflected light on said optical sensor. For example, defining a minimum value of lateral movement after which switching to a different VCSEL occurs, or defining a minimum value of movement of the reflections, after which the VCSEL is switched. Having an array of projection means also reduces the complexity of the system. For example, by switching the operation to a neighboring VCSEL which allows to receive the reflections, instead of having one movable projection means. In other words, different projection means are coupled to different lateral positions of the eye.

Another advantage is allowing different users to use the system, for example in case the location of the eyes of a second user is different than that of the first user, for example having a lateral displacement, for example due to the change of interpupillary distance. In this case, the operation is switched to another VCSEL, but a recalibration may be needed. Therefore, an advantage is creating a universal system rather than a custom-made system.

Ultimately, it is desired that the reflected light from the eye is maintained, as much as possible, at the centre of the optical sensor or close to the centre. Of course, during operation, the reflection will move on the sensor, but it is desired to maintain the reflection, as much as possible, at the centre of the sensor, as this is advantageous to maintain the maximum possible tracking range. For example, by choosing the appropriate VCSEL to maintain this.

For example, the slightest angular and/or lateral translation of the eye, which causes the reflected light to be displaced from the centre of the optical sensor, is followed by adjusting the system (e.g. moving the projection means, or choosing a different projection means) such that the reflection goes back to the centre of the optical sensor, or at least close thereto, as much as possible. For example, the system is adapted to calculate how much does the projection means has to move such that the reflection goes back to the centre of the optical sensor.

Having a plurality of projection means is also advantageous in obtaining an extended depth of focus in the user's eye, for example if the eye is located at different z-values or depths, for example if the eye is deep inside the eye socket or protruding therefrom, or if the nose size is bringing the system closer or further from the eye. Let's assume that there is an optics which focuses the light on the cornea. If an eye of User1 is located at depth Z1, then it is suitable for operation using Projectionmeans1. However, if a User2 whose eye is located at depth Z2 now uses the system, wherein Z2 is for example closer or further to the plurality of projection means than Z1, then a different Projectionmeans2 is suitable for operation. In other words, the projection means which are optimal for the position of the eye of User1 are different than that for User2. In other words, instead of moving the system closer or further from the user to compensate for the difference in the z-value location of the eye, a different projection means is used.

Preferably, the optical sensor is gated. In other words, the sensor reacts to photons being observed within a short period of time. This is advantageous in reducing the noise, for example due to ambient light. This is most relevant in bright light conditions, in which a lot of ambient light is expected. For example, the optical sensor is synchronized with the projection means, so as to read the output by the optical sensor only during the time in which the projection means is operating.

Preferably, the optical sensor comprises a plurality of sensing units forming a matrix of pixels. Each of said sensing units comprises a photodetector. The system is adapted to calculate the displacement of the location of detection based on the displacement of the reflected light on said sensing units. For example, if the first Purkinje reflection is displaced by X number of pixels, it is possible to calculate what angular translation (e.g. a saccade) this corresponds to.

Preferably, the optical sensor has a minimum field of view of at least 5 millimeters on the image plane along the horizontal axis of the eye (e.g. going through the nose and the ears), preferably at least 10 millimeters, more preferably at least 15 millimeters. For example, the 5 millimeters corresponds to around 30 degrees field of vision (horizontally). It is known that the realistic field of vision of the eye is between 32 degrees (horizontal) and 24 degrees (vertical), for example a cone of 30 degrees field of vision. This means that the minimum field of view for the optical sensor on the image plane is around 5.3 millimeters (horizontal) and 4.2 millimeters (vertical). However, to account for the interpupillary distance of the population, the preferred minimum field of view is around 15 millimeters in the horizontal direction, but the vertical direction remains more or less the same i.e. around 4 or 5 millimeters, depending on the use case.

For example, the optical sensor can image an area of at least 5 millimeters square, preferably at least 10 millimeters square, more preferably at least 15 millimeters square, with at least 5 millimeters on the image plane along the horizontal axis of the eye, preferably at least 10 millimeters, more preferably at least 15 millimeters with the horizontal side being as shown below.

The field of view may be covered by one optical sensor, for example a non-moving optical sensor, for example an optical sensor having a large field of view, for example at least 5 millimeters or at least 10 millimeters or at least 15 millimeters. Alternatively, the field of view may be covered by one movable optical sensor, for example an optical sensor with a smaller field of view e.g. 5 millimeters, but which is movable so as to be able to cover an overall larger field of view of at least 10 millimeters or at least 15 millimeters. For example, the optical sensor can be displaced, such that the optical sensor has a total field of view of at least 10 millimeters or 15 millimeters. Alternatively, the field of view may be covered by a plurality of optical sensors, for example each having a small field of view, for example a few millimeters. The optical sensors are arranged such that the total field of view of the plurality of optical sensors is equal to at least at least 5 millimeters or at least 10 millimeters or at least 15 millimeters.

In other words, it is preferable that in the image plane, the field of view would cover the area in which it is possible for angular translation of the eye. This is advantageous since the system is suitable for different users having different interpupillary distance. Since the field of view needed to detect the angular translation of the eye (for example in all extreme directions) is around 5 millimeters, and since the interpupillary distance in people can vary by around 10 millimeters, for example the eye is closer or further from the nose and the ears, this system allows to track the eyes within a large field of view, and therefore is suitable for almost all users. Therefore, the most preferred scenario is to have a total field of view of around 15 millimeters. Depending on the imaging ratio, the size of the optical sensor needs to be calculated accordingly. For example, for a 1:5 imaging ratio, the size of the optical sensor would be around 3 millimeters, which is a reasonable size.

Similarly, in the case of a plurality of projection means, said plurality also covers the same area as discussed above.

For example, the VCSEL array covers at least 5 millimeters, preferably at least 10 millimeters, more preferably at least 15 millimeters, similarly to the above. Therefore, different VCSELs are optimal for operation for different users.

Preferably, the projection means is adapted to be re-oriented, such that if the eye rotates the projection output is kept at said predetermined portion or area of the cornea. This is to keep the first Purkinje reflection at a certain location on the optical sensor. For example, the projection means is always following the eye, and the projection output is always impinging on the cornea. This is based on the location of detection and/or the displacement of the location of detection on the optical sensor. In other words, the optical sensor drives the projection means such that the projection means and therefore the projection output follows the cornea. For example, the optical sensor immediately informs (e.g. using a feedback loop) the projection means with the displacement of the location of detection, for example informs the projection means with an approximate amount and direction in which the eye rotates and in which the projection means should be re-oriented to follow the cornea and to have the projection output on the cornea. For example, the projection output is always kept within a certain range in the cornea. This is advantageous in that the eye is continuously tracked. For example, using at least the first Purkinje reflection, which provides information of such eye angular translation (e.g. a saccade), or additionally using the fourth Purkinje reflection, which provides further information of lateral translation of the eye. The above can also be achieved by means of mirrors or reflectors, for example instead of re-orienting the projection means, the output thereof is manipulated so as to achieve the same result.

Preferably, the system further comprises reflection means, preferably a dynamic deflecting mirror, more preferably a MEMS. The projection output is projected at said reflection means such that said reflection means reflects said output at said predetermined area or portion of the cornea. The reflection means is adapted to be re-oriented, such that if the eye rotates the projection output is kept at said predetermined area of the cornea. For example, one MEMS which is able to reflect the light from the projection means or plurality of projection means. The re-orientation being based on the location of detection or the displacement of the location of detection on the optical sensor. In other words, either the projection means is re-oriented to follow the cornea with the projection output thereof (as described above), or the MEMS receives the projection output, and thereafter rotates and follows the cornea. The use of MEMS is advantageous since it has a fast response time, and low power consumption, and it is easier to rotate said MEMS rather than moving the projection means. For example, such reflection means as MEMS do not consume power if they are not moving. The reflection means or MEMS in this invention have two main purposes: calibration as discussed later, and maintaining the incidence light on the cornea.

The angle of incidence of the beam on the cornea is kept the same or substantially the same, and the area on which the beam is impinging is the same or substantially the same. For example, the angle of incidence may be between 10 and 40 degrees, measuring from the axis defining the central gaze of the eye. The angle of incidence may need to be optimized such that, in case of more than one reflection e.g. the first and fourth Purkinje reflections, that they do not overlap or appear on the same area on the optical sensor, in which case it would not be possible to distinguish therebetween.

It is desired that the angle of incidence, which corresponds to the range of angles in which the MEMS rotates, is minimized. This can be done by having a plurality of projection means or VCSELs, such that if the eye laterally moves (e.g. system slippage of the face of the user), another VCSEL is used, instead of rotating the MEMS to high or extreme angles. This allows the change of the first Purkinje reflection to be purely or almost purely due to angular translation of the eye. This in turn allows better tracking of the eye.

The angle of incidence of the light on the eye is based on the design of the system. For example, the projection means is emitting under a certain angle such that the reflection is received by the optical sensor. For example, the reflection means is coupled to the centre of rotation of the eye, such that the beam is incident on the cornea and impinging on the same spot. For example, the projection means or light source is imaged on the cornea.

The combination of such a reflection means (e.g. MEMS) and projection means with low numerical aperture beam is advantageous. This is because instead of covering the eye area with a large beam, or instead of continuously moving the projection means to a new position that corresponds to the new center of rotation of the eye, the MEMS can be coupled to the center of rotation of the eye, wherein the optical sensor and the displacement of the reflection on the optical sensor drives the rotation of the MEMS. In other words, the MEMS is conjugate to the center of rotation of the eye (i.e. the MEMS and the eye are conjugate planes), and therefore whenever the eye rotates, the MEMS rotates accordingly. For example, the optical sensor is connected to the reflection means in a feedback loop. Alternatively, in case of absence of the MEMS, then the projection means is coupled to the centre of rotation of the eye, and whenever the eye rotates, the projection means rotates accordingly.

For example, the reflection means is re-oriented based on the displacement of the location of detection such that the beam is maintained on substantially the same spot of the cornea within a predetermined error margin. By doing this continuously and in a fast manner, the beam will always be able to follow the cornea, for example such that the cornea is always within a certain range away from the projection output.

In other words, one of the main goals of the MEMS is to maintain the existence of the Purkinje reflections. For example, the MEMS rotates such that it maintains the illumination on the cornea. For example, if the gaze of the eye changes, and the first Purkinje reflection moves from the center of the optical sensor, then based on the movement of the first Purkinje reflection and possibly the fourth Purkinje refection, it is known whether it was angular or lateral translation or a combination thereof, and therefore the MEMS is rotated accordingly to maintain the existence of the Purkinje reflection on the sensor, preferably at the center of the optical sensor. However, if the translation of the eye is purely lateral, it is possible to bring back the Purkinje reflection to the center of the sensor by just switching to another VCSEL source, without moving the MEMS, as was described above.

The rotation of the MEMS is preferably not based on an absolute value of the location of detection, but is based on the change thereof. For example, when there is a change of the location of detection, there is a corresponding change to the MEMS rotation, so as to keep the reflected light in the center of the optical sensor. Rotating the MEMS slightly does not cause changes to the location of detection of the Purkinje reflection, only the angular and lateral translation does.

The chosen MEMS is preferably one that can operate in both open- and closed-loop configurations. For example, it can operate in open loop mode with either quasistatic or resonant mode. In one case, the MEMS operates in a closed-loop mode when the optical sensor is driving the MEMS operation. In the other case, during calibration, the MEMS operates in an open-loop mode.

The feedback loop is based on the first Purkinje reflection. The first Purkinje reflection provides information on both lateral and angular translation of the eye. However, the fourth Purkinje reflection is also useful in understanding lateral translation of the eye, and for example, switch to a different VCSEL. For example, if the gaze moves from one point to another, the pure angular translation of the eye can be calculated by subtracting the change of fourth Purkinje reflection (ΔP4) from the change of the first Purkinje reflection (ΔP1).

This invention is advantageous due to the low latency eye tracking, which in turns reduces the size requirements of the sensor. This is because if the sensor finds the change of location of detection, and the MEMS and/or the VCSEL array is adjusted accordingly to compensate for the change and to bring back the reflection to the center of the optical sensor, then the need for a very big sensor is eliminated.

Preferably, the size of the optics in the systems is kept minimal, so as to keep the size of the system minimal. This can be done by minimizing the movement of the reflection means e.g. the MEMS with respect to changes angular displacement of the eye. For example, if we define a scaling factor being the ratio between the angular translation of the eye and the needed movement of the MEMS, this scaling factor is optimized to reduce the movement of the MEMS. For example, in response to a significant angular translation of the eye, the MEMS would only move as much as needed e.g. would not move too much, such that the size of the optics is kept minimal. In other words, the more the movement of the MEMS, the bigger the optics needed.

Preferably, the output signal of the optical sensor has a repetition rate that is 5 to 10 times more than the resonant frequency of the MEMS. For example, the repetition rate of the output signal is at least 1 kHz, preferably at least 10 kHz. This is advantageous that the MEMS would be quickly rotating to track the eye based on the output of the optical sensor, which also increases the accuracy and reduces the noise.

Preferably, the projection output of the projection means impinges one side of the cornea or impinges the centre of the cornea, preferably one side, since the Purkinje reflection is normally at the side of the cornea. However, the invention is generalized to illuminating any area of the cornea, since it can also be possible to obtain a Purkinje reflection in this way. This is a design choice, and would depend on the position of the other parts of the system.

Preferably, the system is adapted to find, and eventually turn on, in the plurality of projection means, at least one projection means, or two or three or more, a projection means which is not optimal to the operation, but which causes the first and especially the fourth weak Purkinje reflection to be received by said optical sensor. For example, by switching on one or more projection means at a time, until the one or more projection means which allows to obtain the fourth Purkinje image is found, chosen and turned on. For example, in addition to the one or more projection means which causes the first Purkinje reflection to be received by the optical sensor, one or more different projection means which causes the fourth Purkinje reflection to be received by the optical sensor. This is advantageous in case of a small pupil size, for example in case the user is in bright light conditions, then one or more projection means may be needed such that the fourth Purkinje reflection, which is normally a weak reflection, is received by the optical sensor. For example, in the case of a small pupil, the projection means which is necessary to create the fourth Purkinje reflection may not be the optimal one as described above, but the second or third one, for example a projection means with an offset from the optimal projection means. This is another advantage of having a plurality of projection means in an array.

Preferably, in order to begin operation, the system is adapted to be calibrated by scanning the projection output of the projection means along a predetermined scanning trajectory on the cornea. For example, this is done in order to begin operation. During calibration, the most suitable projection means of the plurality of projection means is found and chosen. This is done in the following way. First, the plurality of projection means are turned ON in turn, for example one after the other. At each time and for each projection means, the optical sensor is observed. The projection means which produces Purkinje reflections are chosen. Normally this would be a group of neighboring projection means, and some outlier projection means due to e.g. noise. Thereafter, the reflection means (e.g. MEMS) scans each of the resulting projection means along a known scanning trajectory, for example a Lissajous or raster scan or other suitable scans. The projection means for which Purkinje reflections move the least during said scan is chosen and is therefore the one which will be used in the eye tracking process. For example, the light source that causes the least lateral motion of the P1 and P4 reflections. This is because the most suitable projection means for operation would have the least decenter from the optical axis of the cornea. In other words, for the most suitable projection means, scanning the MEMS along a known scanning trajectory, for example scanning the MEMS within a small area, for example within the range of the cornea, will not result in dramatic movement of the Purkinje reflections, since the output thereof would still be falling in the cornea. For example, scanning or rotating the mems with a certain amount then choosing the projection means which has the right (e.g. expected) reflection ratio between P1 and P4. For example, applying formula (1) in (High-resolution eye-tracking via digital imaging of Purkinje reflections, Ruei-Ju Wu et al., https://doi.org/10.1101/2022.08.16.504076).

Preferably, each of said photodetector is a single photon detector, preferably a single photon avalanche detector (SPAD) capable of detecting single photons. SPADs are useful since they have low response time with minimum photon budget. SPADs can detect single photons, therefore they are very accurate and have a high dynamic range. This is advantageous in that the fourth Purkinje reflection, which is a weak reflection, can be obtained, since SPADs are sensitive to single photons and therefore weak signals. For example, SPADs are advantageous because they are able to detect both first and fourth reflections, which are three orders of magnitude difference in intensity. This is also advantageous in that the optical sensor has low response time, for example the photons are is detected and encoded into a digital signal in nanoseconds, such that the eye is continuously tracked and such that the projection output is always within a certain range from the predetermined portion of the cornea. The low response time or low latency is also advantageous in detecting change of position in the optical sensor in a quick manner, and for example thereafter transmitting the change to the reflection means or MEMS. SPADs are also useful due to their photon sensitivity, which implies that the projection output will need a minimal amount of energy.

Preferably, the at least one optical sensor comprises a first optical sensor and a second optical sensor, wherein each optical sensor is adapted to receive a different reflection. For example, wherein the first optical sensor is adapted to receive the first Purkinje reflection, and the second optical sensor is adapted to receive the fourth Purkinje reflection. For example, the second optical sensor is more sensitive, such that the fourth Purkinje reflection (which is a weak reflection) is detected. For example, by splitting the light coming into the optical sensors into two parts, and each optical sensor receiving one part thereof. This is advantageous in bright light conditions, where the fourth Purkinje reflection is very weak due to the pupil being small.

Preferably, the system is adapted to find two projection means, wherein each of the two is adapted to create a different Purkinje reflection. For example, the system can be configured such that one or more projection means create the first Purkinje reflection, and one or more other projection means create the fourth Purkinje reflection.

Preferably, the optical sensor is positioned in the conjugate plane of the pupil. This is the plane where the virtual first Purkinje reflection and the real fourth Purkinje reflection are in focus. This is advantageous in that there is a definitive ratio between the eye's angular translation and the displacement observed by the optical sensor. For example, if the eye is angularly displaced with A degrees, this corresponds to B displacement of the detection on the optical sensor, wherein A and B are related by a known ratio, said ratio being a calibration factor which depends on the user. For example, this calibration factor is found during the initial calibration of the system, and is different from one user to another. For example, by asking the user to rotate his eyes following a certain pattern, after which the reflection changes accordingly. Based on how much the eye moved and how much the detection moved, it is possible to obtain the calibration factor. For example, by calculating which angular and/or lateral translation causes which displacement observed by the optical sensor. This calibration factor would be different for each user, as it depends on the properties of the cornea. This calibration factor is also affected by other properties of the eye such as the optical aberration and the corresponding cylinder distortion in the optical sensor, which is why the calibration factor is not the same for different people. This cylinder distortion is not the same in the vertical and horizontal directions. Also, for some people, the distortion may be in both vertical and horizontal directions. Therefore, if the eye moves in both horizontal and vertical directions, both cylinder distortions play a role. Therefore, the calibration factor is not the same in the horizontal direction and in the vertical direction. This system is advantageous because it is adapted to find out the distortion in both directions. This is done during calibration. For example, the system would asl< the user to move their eye horizontally, vertically, and in combination thereof, and thereafter would calculate how much this distortion is. In many cases, this distortion is a combination of vertical and horizontal distortion, and therefore it is desirable to understand the displacement observed by the optical sensor in case the eye is moving in a combination of vertical and horizontal directions.

Preferably, the projection means is operated in a pulsed mode. For example, wherein each pulse is aimed to produce a different Purkinje reflection on the optical sensor. For example, one pulse which is weak or normal in intensity which produces the first Purkinje reflection, since such reflection is a strong one, and one pulse which is strong in intensity which produces the fourth Purkinje reflection, since such reflection is a weak one. Alternatively, these pulses may have different lengths. For example, a short pulse to observe the first Purkinje reflection, and a long pulse to observe the fourth Purkinje reflection. Alternatively, the optical sensor is configured to have two regions of interest, wherein one region is expected to receive the first Purkinje reflection, and the other region is expected to receive the fourth Purkinje reflection. For example, wherein one region of interest has one sensitivity, and the other region of interest has a different sensitivity, and therefore allowing to capture both the first and fourth Purkinje reflection. For this, it is needed to estimate, during the calibration phase, where on the optical sensor the first strong Purkinje reflection is received, and where the fourth weak reflection is received. For example, if the location of detection on the optical sensor has a large size, then this detection is likely the first Purkinje reflection, and similarly if the location of detection on the optical sensor has a small size, then this detection is likely the fourth Purkinje reflection. Thereafter, the different regions of interest may for example have pixels or SPADs having different bias values, or different observation windows, which is suitable to the first or fourth Purkinje reflection. Then, after calibration i.e. during normal operation, the system tracks the relative position of the reflections. Alternatively, the pixel sensors may have tuneable sensitivities. For example, conducting two measurements, one measurement with one sensitivity, and one measurement with another sensitivity. For example, the sensitivity of the optical sensor is tuned, sometimes to detect the first Purkinje reflection, and other times to detect the fourth Purkinje reflection. The above solutions are advantageous in solving the problem that the first and fourth Purkinje reflections are three orders of magnitude different. Another way to solve this problem is by filtering the data on the optical sensor from noise such as ambient light, and consequently to reduce the number of sensing units with false detections, therefore making it easier to identify the fourth weak Purkinje reflection. For example, checking the detection of the neighboring sensing units (e.g. pixels), since Purkinje reflections are likely to be detected over more than one pixel, as descried in PCT EP2021 087594. Alternatively or additionally, checking the persistence of the detections over time as described in PCT IB2022 058609, since the eye doesn't move dramatically within very short time spans, and therefore the Purkinje reflections are not moving in very short time spans. For example, it doesn't move dramatically in 40 nanoseconds, or even 100 nanoseconds. Therefore, the detections which are persistent over a long period of time are likely true detections, and the detections otherwise are likely false detections. Alternatively or additionally, each detector is connected with one column bus and one row bus, as described in PCT/IB2021/054688, to prevent reading the output pixel by pixel, which is advantageous in reducing the noise and also making the system faster. Other filtering mechanisms may be envisaged, as described in PCT IB2021 054688, PCT EP2021 087594, PCT IB 2022 000323, and PCT IB2022 058609.

For example, the system is adapted to filter the location of detection, determined by said plurality of sensing units. For example, the reflected light is segregated from ambient light and noise. This may be based on the presence of said detection over one or two or more neighboring or semi-neighboring sensing units, for example by considering only pixels in the true status having at least one neighboring pixel also in the true status. This may additionally or alternatively be based on the presence of said detection over at least two consecutive time steps. For example, considering only pixels in the true status having at least one neighboring pixel also in the true status in the plurality of pixels obtained in one observation or a combination of the at least two consecutive or semi-consecutive observation windows.

For example, wherein each pulse has a first predetermined intensity or second predetermined intensity, or wherein each pulse has a first predetermined pulse width or a second predetermined pulse width. Said first predetermined intensity or first predetermined pulse width is adapted to cause one reflection (e.g. the first Purkinje reflection) to be received by said optical sensor, and wherein said second predetermined intensity or second predetermined pulse width is adapted to cause one different reflection (e.g. the fourth Purkinje reflection) to be received by said optical sensor. For example, the first predetermined intensity is a low intensity which still allows the first strong Purkinje reflection to be received by the optical sensor, and the second predetermined intensity is a high intensity which allows the fourth weak Purkinje reflection to be received by the optical sensor. Similarly, for example, the first predetermined pulse width is shorter than the second predetermined width, since the first Purkinje reflection is stronger than the fourth Purkinje reflection.

Preferably, the optical sensor is configured to measure the location(s) of the reflection, and outputting said location(s) at the output of the optical sensor. In other words, the optical sensor only outputs the location of detections i.e. the sensing units which detects a detection, and therefore there is no need to read each sensing unit in the plurality of sensing units. This is described in PCT/IB2021/054688. This is advantageous in reading only units that have detection, and therefore saving energy and time of reading sensing units. Furthermore, a specific implementation would be to calculate the area of the detection, and determine as a result the average position of detection, which would represent the average position on which the Purkinje reflection falls on.

Preferably, the projection means is operated in a pulsed mode with a known pulsing frequency. The system is adapted such that the unwanted signal and noise, for example originating from external light sources illuminating the eye, is minimized or eliminated. This is done by only considering detections having the known pulsing frequency of the projection means, or substantially the same frequency, and discarding detections having different or substantially different pulsing frequencies.

Preferably, the optical sensor is configured to measure at least two, preferably two, locations of detections on said optical sensor simultaneously, and to provide said locations at the output of said optical sensor. Preferably, each of said locations corresponds to a different specular reflection. Advantageously, one location of detection correspondis to the first Purkinje reflection (P1), and one location of detection corresponds to the fourth Purkinje reflection (P4). This is advantageous in allowing to calculate the lateral and/or angular translation of the eye, which depends partially or completely on both the first and fourth Purkinje reflection.

In a second aspect, the present invention relates to a display system using the eye tracking system according to the first aspect. For example, in a VR system displaying a scene based on the direction of the gaze.

In a third aspect, the present invention relates to a method for eye tracking, for example corresponding to the system of the first aspect. The method comprises the step of projecting, by means of at least one projection means, a projection output onto a predetermined area of the cornea of the eye. The method further comprises the step of detecting, by means of at least one optical sensor, reflected light from the eye. The reflected light from the eye comprises at least one reflection, preferably two reflections. The method further comprises the step of determining the location of detection of said reflected light on said optical sensor. The method further comprises the step of calculating the orientation of the eye, for example the lateral and/or angular translation of the eye or the change thereof, based on the location of detection and/or displacement thereof.

Preferably, the method comprises the step of configuring the projection means to be movable. For example, the method comprises the step of moving or positioning said projection means such that the at least one reflection is received by said optical sensor. Alternatively, the method comprises the step of configuring the projection means to be a plurality of projection means, preferably arranged in a 1 or 2-dimensional array. The method further comprises the step of finding and switching at least one projection means which causes the at least one reflection to be received by said optical sensor, preferably at least the first Purkinje reflection and the fourth Purkinje reflection.

Preferably, the method comprises the step of switching the operation from one projection means to another projection means, based on the location of detection and/or the displacement thereof. For example, based on the lateral translation of the eye. For example, in case the first projection means does not produce the reflection on the eye anymore, due to the lateral translation of the eye or slippage.

Preferably, the method comprises the step of configuring the optical sensor to comprise a plurality of sensing units forming a matrix of pixels, each comprising a photodetector.

Preferably, the method comprises the step of configuring the at least one optical sensor to have a minimum field of view of at least 5 millimeters on the eye image plane, along the horizontal axis of the eye, preferably at least 10 millimeters, more preferably at least 15 millimeters. The method further comprises the step of covering said field of view by one optical sensor with a total of view of at least said minimum field of view. Alternatively, the method further comprises the step of covering said field of view by one movable optical sensor which position is movable to have a total field of view equal to at least said minimum field of view. Alternatively, the method further comprises the step of covering said minimum field of view by a plurality of optical sensors with a total field of view equal to at least said minimum field of view.

Preferably, the method comprises the step of re-orienting the projection means, such that if the eye rotates the projection output is kept at said predetermined area of the cornea. Said re-orientation being based on the location of detection and/or the displacement thereof.

Preferably, the method comprises the step of reflecting, by means of a reflection means, said projection output at said predetermined area of the cornea. For example, the projection output is projected at said reflection means, and thereafter reflected said output at said predetermined area of the cornea. The method further comprises the step re-orienting the reflection means, such that if the eye rotates the projection output is kept at said predetermined area of the cornea. Said re-orientation being based on the location of detection and/or the displacement thereof.

Preferably, the method comprises the step of finding, in the plurality of projection means, at least one different projection means which causes the fourth Purkinje reflection to be received by said optical sensor.

Preferably, the method comprises the step calibrating the system. Said calibration comprises the step of scanning the projection output of the projection means along a predetermined scanning trajectory on the cornea.

Preferably, the method comprises the step of providing, in each of said photodetector, a single photon avalanche detector SPAD capable of detecting single photons.

Preferably, the method comprises the step of providing a first optical sensor and a second optical sensor. The method further comprises the step of configuring the first optical sensor to receive one reflection and configuring the second optical sensor to receive one different reflection.

Preferably, the method comprises the step of positioning the optical sensor in the conjugate plane of the pupil.

Preferably, the method comprises the step of filtering the data of the sensing units. For example, filtering based on the presence of said detection over one or two or more neighboring or semi-neighboring sensing units, and/or based on the presence of said detection over at least two consecutive time steps.

Further characteristics and advantages of embodiments of the present invention will be described with reference to the figures. It should be noted that the invention is not restricted to the specific embodiments shown in these figures or described in the examples, but is only limited by the claims.

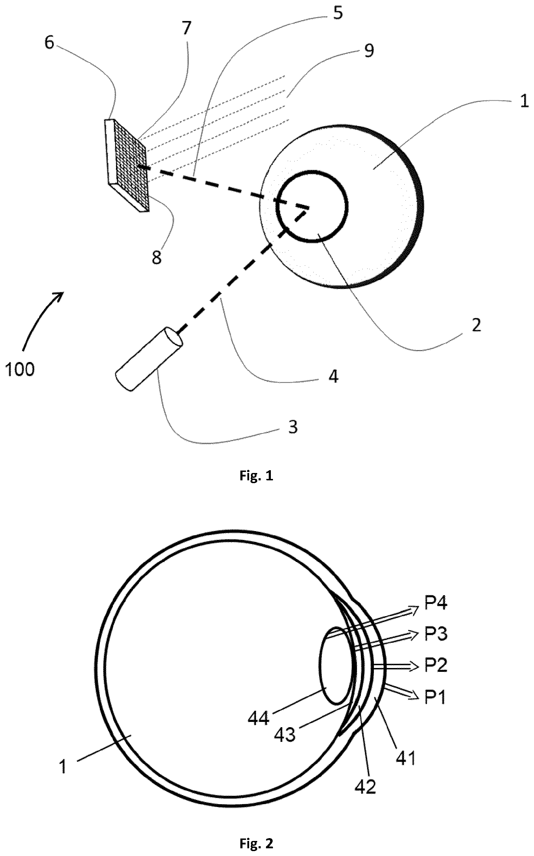

Fig. 1 schematically represents an eye tracking system (100) according to the invention. In Fig. 1, a projector (3) projects an output (4) on the cornea of the eye (1), preferably a predetermined portion of the cornea (2), preferably a side of the cornea, for example a left or a right side thereof. The incident light (4) is then reflected (5) to the optical sensor (6). The optical sensor (6) comprises a plurality of pixels (7) arranged in a matrix. Based on the reflected light (5) received by the optical sensor (6), which corresponds to an angular or lateral translation of the eye, the orientation of the projector is changed, so as to follow the cornea.

Fig. 2 shows different layers (41-44) of an eye (1) and different Purkinje reflections (P1-P4) according to the invention. The most important layer is the cornea (41) and the lens (44). The light reflected due to the cornea (41) is referred to as the first Purkinje reflection (P1), while that reflected by the lens (44) is referred to as the fourth Purkinje reflection (P4).

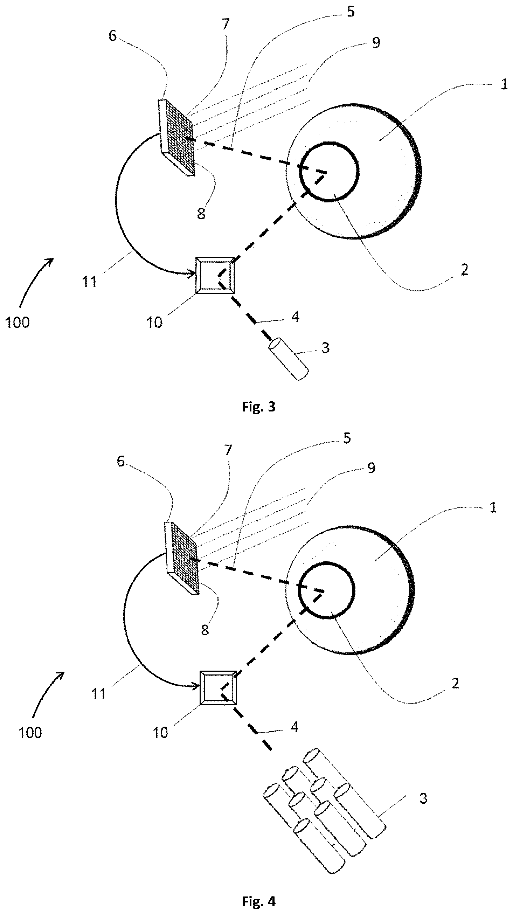

Fig. 3 schematically represents an alternative configuration of the eye tracking system (100). In this case, a reflection means, or a MEMS (10) receives the projection output (4), and reflects it to the cornea. Using a feedback loop (11), the optical sensor (6) drives the movement of the MEMS (10) to follow the angular translation (e.g. a saccade) of the eye (1) based on the displacement of the Purkinje reflections (P1, P4) on the optical sensor (6).

Fig. 4 schematically represents an alternative configuration of the eye tracking system (100). The difference to Fig. 3 is that there is a plurality of projectors (3). In the calibration phase, the projectors are turned on one after another, so as to find the projectors which produce a first Purkinje reflection, and possibly a fourth Purkinje reflection. This results in finding a group of projectors which satisfies this condition. Thereafter, the best projector among this group is chosen. For example, by turning one projector on at a time, and scanning the projector in a known pattern, for example a Lissajous pattern, for which it is known how the first reflection and possibly the fourth reflection will move on the optical sensor. By doing this, the best projector for operating the system is found, and the system is calibrated. Such a calibration only has to be done once. Having a plurality of projectors is useful to align to different lateral positions of the eye, for example in case the eye moves laterally, or in case the system slips off the face of the user. In this case, instead of moving the MEMS, it is more efficient and faster to switch to a different projector.

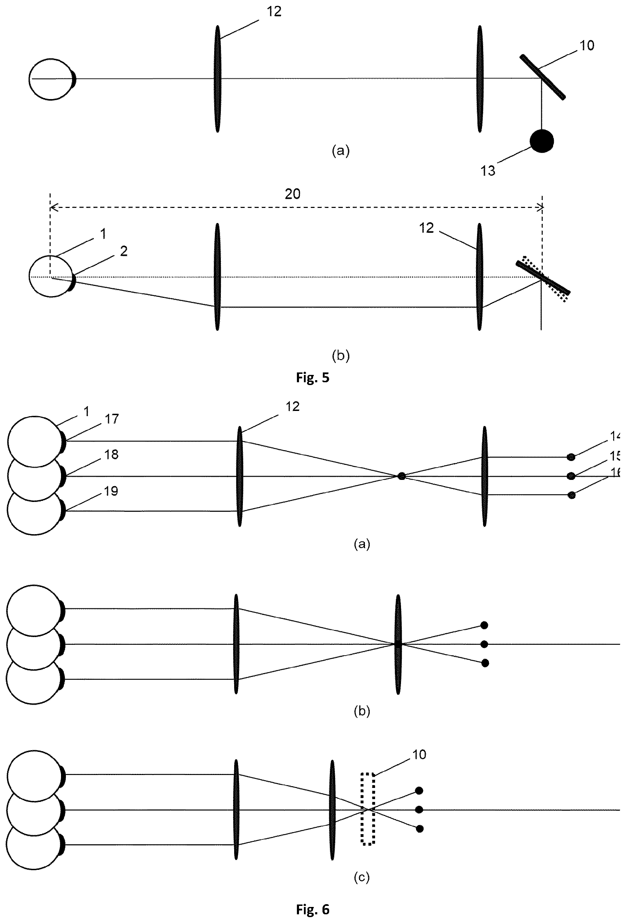

Fig. 5 shows a light source or emitter (13), which output is falling on a mirror (10). Depending on the orientation of the mirror (10), the light is then reflected in a certain angle. The light goes through some optics which focuses the light on the cornea (2) of the eye (1). For example, the eye (1) has moved from its position in (a) to another position in (b). By correctly rotating the MEMS, the light is maintained on the same spot, and therefore the eye is continuously tracked. The skilled person understands that the system can be arranged in many ways, for example there could be many other alternatives for the optics used in the system, so the system is not limited by this implementation. As shown by reference sign (20), the mirror (10) and the eye (1) are conjugate planes.

Fig. 6 shows an example implementation of the system. In (a), three VCSELs are arranged in an array, as well as optics which focus the light in the eye (1). By switching between the VCSELs, it is possible to switch the operation to a different lateral position of the eye. For example, the image of VCSEL (14) is created on area (19), and similarly for (15) on (18), and (16) on (17). This allows to, instead of rotating the MEMS under high or extreme angles, to just switch to another VCSEL. In other words, the MEMS is desired to rotate only in a small range of angles, for example but not limited thereto, at most 5 or 10 or 15 degrees, measured from the central gaze of the eye. As a result, the change in the Purkinje reflection would be to a great extent due to angular translation of the eye, and to a little extent due to lateral translation. This allows accurate tracking of the eye. This also facilitates the convergence of the closed loop operation.

This system can be optimized to be smaller, as shown in (b), by changing the direction of illumination of the VCSELs. For example, such that the output of the VCSELs intersect in the optics or lens. In (c), the system is optimized further by pushing the optics closer to the eye, and by having the output of the VCSELs intersect before the optics or lens, and placing the MEMS mirror in the spot in which the output of the VCSELs intersect. Of course, the used optics or lenses define the magnification of this part, and therefore also define the size of the VCSEL array.

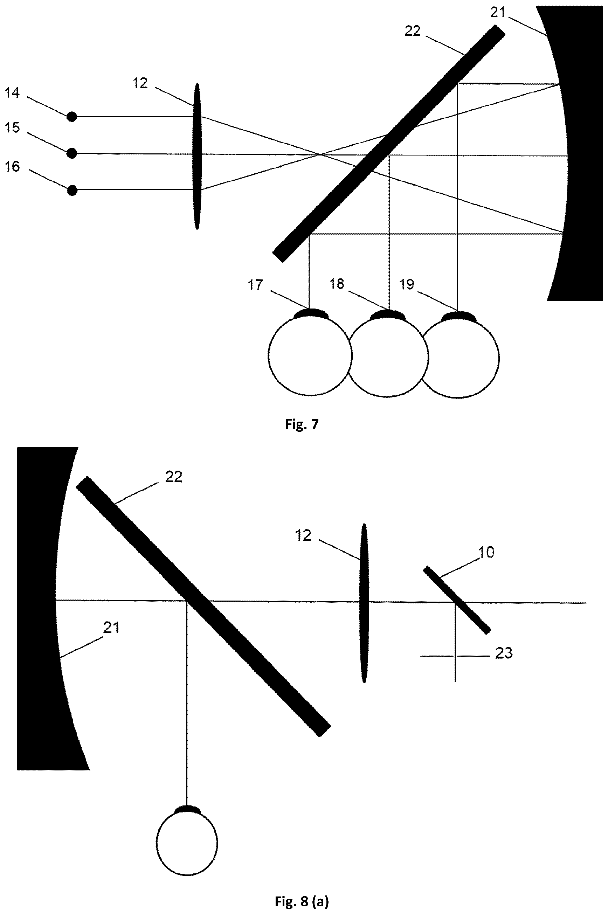

Fig. 7 shows another implementation of the system, comprising an array of VCSELs (14-16). A VCSEL is chosen depending on the lateral position of the eye (17-19). In this implementation, a reflective surface (21) reflects the light to the eye, with the help of the rotatable mirror (10).

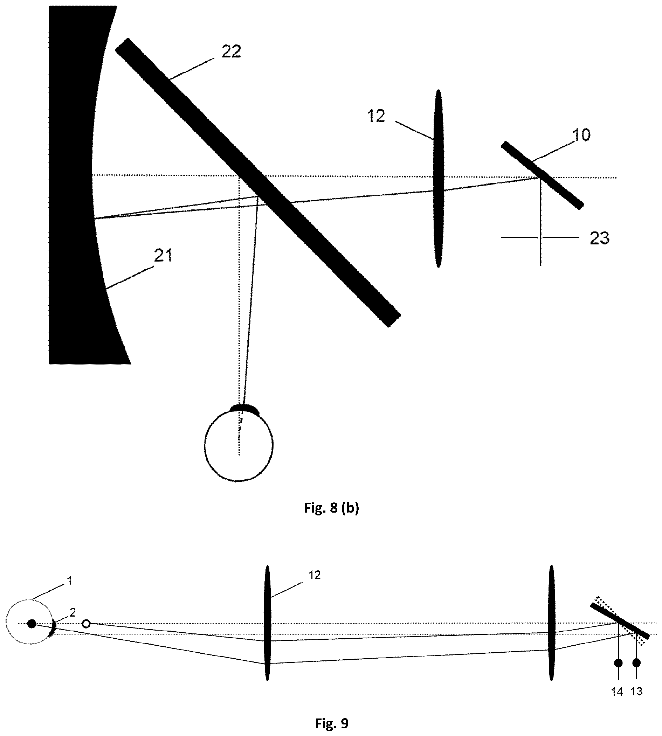

Fig. 8 (a) shows a similar implementation to the one in Fig. 7, taking into account only one lateral position of the eye, and one light source. In this case, a pin-hole (23) is also present, although this is not always necessary. A second mirror is also present (22). Fig. 8 (b) shows that, by tuning or rotating the mirror (10), the eye can be tracked at another angular position.

Fig. 9 shows an implementation of the system, in which two VCSELs (13-14) are shown. As discussed above, switching between the VCSELs allows to couple to different lateral positions of the eye. However, another problem to be solved is to couple to different z-positions of the eye. This requires both changing the VCSEL as well as rotating the MEMS.

For example, Kalman filter may be used to calculate the lateral and angular change needed, for example which VCSELs to switch to, and how much to rotate the mirror. For example, a first VCSEL (14) at a first location, with a first rotation value of the MEMS (the dotted MEMS), creates an image at a first z-position (the white circle). On the other hand, a second VCSEL (13) at a second location, with a second rotation value of the MEMS (the solid MEMS), creates an image at a second z-position (the solid circle).

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Eye
- **2**: Predetermined area of the cornea or cornea
- **3**: Projection means or laser source
- **4**: projection output or Laser beam
- **5**: Reflected light
- **6**: Optical sensor
- **7**: Pixel
- **8**: Photodetector
- **9**: Ambient light
- **10**: Reflection means or MEMS
- **11**: Feedback loop
- **12**: Optics
- **13**: Emitter
- **14, 15, 16**: Light sources or VCSELs
- **17, 18, 19**: Different lateral positions of the eye
- **20**: Conjugate planes
- **21**: Reflective surface
- **22**: Mirror
- **23**: Pin hole
- **100**: Eye tracking system
- **41**: Cornea
- **42**: Anterior chamber
- **43**: Iris
- **44**: Lens
- **P1**: First Purkinje reflection
- **P2**: Second Purkinje reflection
- **P3**: Third Purkinje reflection
- **P4**: Fourth Purkinje reflection

## Claims

1. A method for tracking an eye orientation comprising the steps of:
a. illuminating the cornea of the eye (1) to be tracked by a focused light beam (4) on a predetermined area of said cornea (2), preferably in a pulsed mode, by means of a projection means (3);
b. detecting the reflected light (5) from the eye (1) by means of at least one optical sensor (6), said reflected light (5) comprises at least one, preferably two, specular reflection, said reflection is preferably at least a first Purkinje reflection (P1), more preferably at least a first Purkinje reflection (P1) and a fourth Purkinje reflection (P4);
c. determining the location of detection on said at least one optical sensor (6), preferably wherein the optical sensor (6) comprises a plurality of sensing units (7) forming a matrix of pixels, preferably each sensing unit (7) comprising a photo detector (8), preferably each photo detector is a single photon avalanche detector;
d. from the determined location of detection and/or the displacement thereof, calculating the orientation of said eye (1) and/or the change thereof.

2. A method according to claim 1, wherein:
- said projection means (3) is one movable projection means (3), the method comprises the step of positioning the projection means (3) such that the reflected light (5) is received by said optical sensor (6); or
- said projection means (3) is a plurality of projection means (3) arranged in a 1 or 2-dimensional array, the method comprises the step of finding at least one projection means which causes the reflected light (5) to be received by said optical sensor (6).

3. A method according to claim 2, wherein the method further comprises the steps of, in the plurality of projection means, switching the operation from one projection means to another projection means, based on the location of detection and/or displacement thereof, such that the reflected light (5) is received by said optical sensor (6).

4. A method according to any of claims 1 to 3, wherein the method further comprises the step of filtering the location of detection, determined by one sensing unit in said plurality of sensing units (7), based on the presence of said detection over at least one neighboring sensing unit to said one sensing unit, or based on the presence of said detection over at least two consecutive time steps.

5. A method according to any of claims 1 to 4, wherein the method further comprises the step of configuring the at least one optical sensor to have a minimum field of view of at least 5 millimeters on the eye image plane, along the horizontal axis of the eye (1), preferably at least 10 millimeters, more preferably at least 15 millimeters; wherein said field of view is covered by:
- one optical sensor (6) with a total of view of at least said minimum field of view, or
- one movable optical sensor (6) which position is movable to have a total field of view equal to at least said minimum field of view, or
- a plurality of optical sensors (6) with a total field of view equal to at least said minimum field of view.

6. A method according to any of claims 1 to 5, wherein the method further comprises the step of re-orienting the projection means (3), such that if the eye (1) rotates, the light beam (4) is kept at said predetermined area of said cornea (2), said re-orientation being based on the location of detection and/or the displacement thereof.

7. A method according to any of claims 1 to 6, wherein the method further comprises the steps of:
- projecting the light beam (4) on a reflection means (10);
- reflecting said light beam (4) to said predetermined area of the cornea (2);
- based on the location of detection and/or the displacement thereof, re-orienting said reflection means (10) such that if the eye (1) rotates, the light beam (4) is kept at said predetermined area of the cornea (2).

8. A method according to any of claims 2 to 7, wherein the method further comprises the step of finding, in the plurality of projection means (3), at least one different projection means (3) which causes the fourth Purkinje reflection (P4) to be received by said optical sensor (6).

9. A method according to any of claims 1 to 8, wherein the method comprises the step of scanning the light beam (4) along a predetermined scanning trajectory on the cornea (2).

10. A method according to any of claims 1 to 9, wherein the at least one optical sensor (6) comprises a first optical sensor and a second optical sensor, wherein the method comprises the step of:
- configuring the first optical sensor to receive one reflection, and
- configuring the second optical sensor to receive one different reflection.

11. A method according to any of claims 1 to 10, wherein the method comprises the step of positioning the optical sensor (6) in the conjugate plane of the pupil (2).

12. A method according to any of claims 1 to 11, wherein the method comprises the steps of:
- operating the projection means (3) in a pulsed mode;
- configuring each pulse to have:
▪ a first predetermined intensity or a second predetermined intensity, or
▪ a first predetermined pules width or a second predetermined pulse width;
- adapting the first predetermined intensity or first predetermined pulse width to cause one reflection to be received by said optical sensor (6); and
- adapting the second predetermined intensity or second predetermined pulse width to cause one different reflection to be received by said optical sensor (6).

13. An eye tracking system (100), comprising:
- at least one projection means (3) adapted to project a light beam (4) on a predetermined area of a cornea (2) of an eye (1), preferably operated in a pulsed mode;
- at least one optical sensor (6) capable of detecting reflected light (5) from the eye (1) and determining the location of detection thereon, preferably wherein the optical sensor (6) comprises a plurality of sensing units (7) forming a matrix of pixels, preferably each of said sensing units (7) comprising a photodetector (8), preferably each photo detector is a single photon avalanche detector;
wherein the reflected light (5) from the eye (1) comprises at least one, preferably two, specular reflection, preferably at least a first Purkinje reflection (P1), more preferably at least a first Purkinje reflection (P1) and a fourth Purkinje reflection (P4);
wherein the system (100) is adapted to calculate the lateral and/or angular position of the eye (1), or the change thereof, based on the location of detection and/or the displacement of said at least one reflection.

14. An eye tracking system (100) according to claim 13, wherein said at least one projection means (3) is one movable projection means positioned such that the at least one reflection is received by said optical sensor (6), or
wherein said at least one projection means (3) is a plurality of projection means (3), preferably arranged in a 1 or 2-dimensional array, wherein the system (100) is adapted to find at least one projection means which causes the at least one reflection to be received by said optical sensor (6), preferably at least the first Purkinje reflection (P1) and the fourth Purkinje reflection (P4).

15. An eye tracking system (100) according to any of claims 13 to 14, wherein, during the calibration of the system (100), the system is adapted to determine the ratio between the eye's angular translation and the displacement of the location of detection observed by the optical sensor (6).

16. An eye tracking system (100) according to any of claims 13 to 15, wherein the at least one optical sensor (3) is configured to measure at least two, preferably two, locations of detections on said optical sensor (6) simultaneously, and to provide said locations at the output of said sensor (6), wherein each of said locations corresponds to a different specular reflection.
